# NOUVEAU FASCICULE DE BREVET EUROPEEN

(11) **EP 0 443 934 B2**
(45) Date de publication et mention de la décision concernant l'opposition: **01.04.1998**
(45) Mention de la délivrance du brevet: 27.07.1994
(21) Numéro de dépôt: 91400433.8
(22) Date de dépôt: 19.02.1991
(51) Int. Cl.: B60S 1/04

(54) **Dispositif d'essuie-glace, avec réservoir de liquide de lavage**
Scheibenwischeranlage mit Waschwasserbehälter
Window wiper arrangement with washing watertank

(30) Priorité: 22.02.1990 FR 9002184
(43) Date de publication de la demande: 28.08.1991
(73) Titulaire: VALEO SYSTEMES D'ESSUYAGE, 78180 Montigny-Le-Bretonneux (FR)
(72) Inventeur: Eustache, Jean-Pierre, F-92160 Antony (FR); Berge, Gilles, F-78120 Clairefontaine-en-Yvelines (FR); Roumegoux, Jean-Louis, F-75016 Paris (FR)
(74) Mandataire: Gamonal, Didier

(56) Documents cités:
- DE-B- 2 329 118
- FR-A- 1 368 673
- FR-A- 2 613 303
- GB-A- 1 051 820
- GB-A- 2 116 921
- US-A- 3 447 185
- US-A- 4 318 510

## Description

L'invention est relative à un dispositif d'essuie-glace du genre de ceux qui comprennent, d'une part, un mécanisme d'entraînement d'au moins un bras d'essuie-glace avec un encombrement longitudinal, transversal et en hauteur, ledit mécanisme comportant un bâti sur lequel sont montés des moyens moteurs et une tringlerie de transmission du mouvement entre un arbre entraîné par les moyens moteurs et au moins un arbre de bras d'essuie-glace, ce bâti étant destiné à être fixé sur la structure d'un véhicule, en particulier un véhicule automobile comme cela est connu par le document FR-A-1 368 673, et, d'autre part, un réservoir de liquide de lavage d'encombrement longitudinal, transversal et en hauteur, des moyens de pompage étant prévus pour permettre la projection du liquide de lavage sur la glace lors d'un essuyage comme mieux montré dans le document US-A-3 447 185 ; l'encombrement transversal du réservoir étant inclus dans l'encombrement transversal du mécanisme d'entraînement comme représenté dans le document DE-B-2329118.

Il est souhaitable, en particulier dans l'industrie automobile, qu'un tel dispositif d'essuie-glace soit d'une mise en place simple et rapide sur le véhicule qu'il doit équiper. Pour ce faire on peut songer à utiliser une disposition dans laquelle le dispositif d'essuie-glace avec réservoir de liquide de lavage forme un ensemble, comme décrit dans le document DE-B-2 329 118 conforme au préambule de la revendication 1. Néanmoins, un tel dispositif n'est pas d'un encombrement aussi réduit que possible.

D'une manière générale il est souhaitable de réduire l'encombrement autant que possible.

L'invention a pour but, surtout, de fournir un dispositif d'essuie-glace qui réponde mieux que jusqu'à ce jour aux exigences évoquées ci-dessus, tout en restant d'une conception simple et économique.

C'est donc un but de l'invention de réaliser un dispositif d'essuie-glace formant un ensemble aussi compact que possible se prêtant bien à une mise en place simple et rapide sur le véhicule qu'il doit équiper.

Selon l'invention, un dispositif d'essuie-glace du genre défini précédemment est caractérisé en ce que le bâti est constitué principalement de la platine, lesdits moyens moteurs faisant saillie sur le côté de la platine qui est opposé à celui où se trouve la transmission de mouvement, en ce que la transmission de mouvement comporte une tringlerie de transmission de mouvement entre un arbre entraîné par les moyens moteurs et ledit au moins arbre de bras d'essuie-glace, en ce que le réservoir est relié à la platine du mécanisme d'entraînement en formant avec ce mécanisme d'entraînement un ensemble tel que l'encombrement longitudinal, transversal et en hauteur du réservoir soit inclus dans l'encombrement longitudinal, transversal et en hauteur du mécanisme d'entraînement et en ce que le réservoir a une paroi extérieure tournée vers la platine qui est concave et qui lui permet de recevoir dans sa concavité une partie des moyens moteurs du mécanisme d'entraînement.

Généralement, le bâti comprend une platine d'un côté de laquelle se trouve la tringlerie de transmission, tandis que les moyens moteurs font saillie de l'autre côté de la platine, cette platine ayant une forme allongée suivant la direction d'ensemble de la tringlerie de transmission ; le réservoir de liquide de lavage est avantageusement réalisé sous une forme allongée, selon la même direction d'ensemble que la tringlerie.

La platine peut comporter, sur un bord longitudinal, en particulier tourné vers l'avant , deux pattes écartées d'une de l'autre, dirigées vers le bas, comportant des ouvertures propres à recevoir des parties en saillie prévue sur le réservoir, tandis que sur le bord longitudinal opposé est prévue au moins une patte dirigée vers la bas propre à être fixée, notamment par une vis, sur un appui prévu sur le réservoir.

Le bâti comporte des moyens de fixation, tels que des manchons taraudés orientés sensiblement orthogonalement au plan moyen de platine, pour la fixation de l'ensemble bâti/réservoir sur la structure du véhicule.

L'invention consiste, mises à part les dispositions exposées ci-dessus, en un certain nombre d'autres dispositions dont il sera plus explicitement question ci-après à propos d'exemples de réalisation décrits avec référence aux dessins ci-annexés, mais qui ne sont nullement limitatifs.

La figure 1, de ces dessins, est une vue en perspective d'un dispositif d'essuie-glace conforme à un mode de réalisation de l'invention.

La figure 2 est une vue en coupe d'un détail de la figure 1 selon la flèche II, figure 1.

La figure 3 est une vue d'un détail situé à la partie arrière du bâti de la figure 1, selon la flèche III, figure 1.

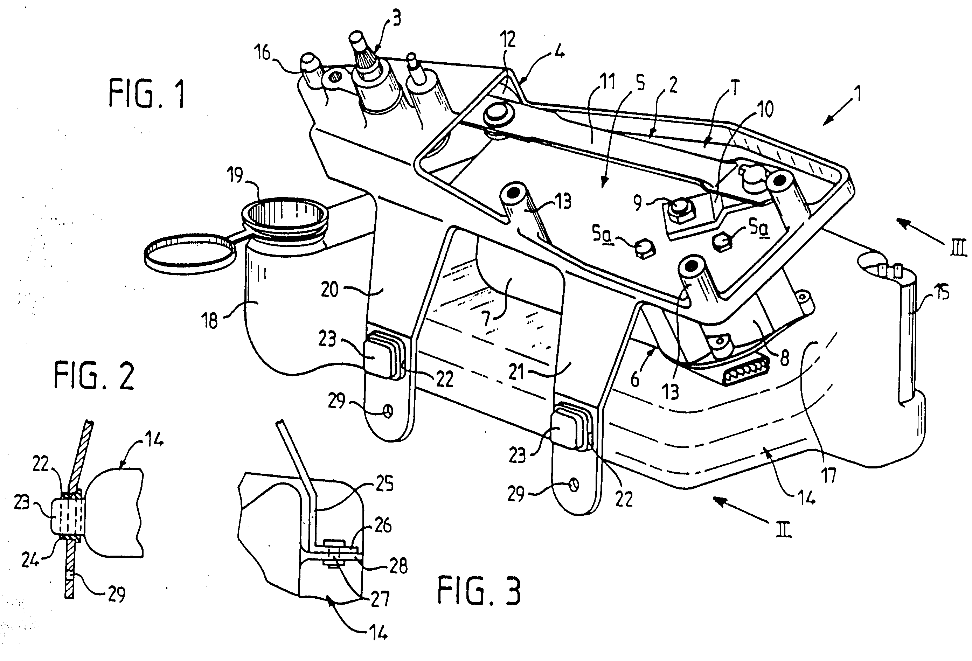

En se reportant à la figure 1 des dessins, on peut voir un dispositif d'essuie-glace 1 comprenant un mécanisme d'entraînement 2 d'un bras d'essuie-glace (non représenté) qui est calé sur l'extrémité d'un arbre 3 d'entraînement du bras.

Le mécanisme d'entraînement 2 comprend un bâti 4 constitué principalement d'une platine 5. Sous cette platine sont fixés, par des vis 5a, des moyens moteurs 6 comprenant notamment un moteur électrique 7, dont l'axe est sensiblement parallèle à la direction longitudinale de la platine 5, et un réducteur 8 dont l'arbre est orthogonal au plan moyen de la platine 5 qu'il traverse. L'extrémité 9 de l'arbre du réducteur 8 permet d'entraîner, du côté de la platine 5 opposé aux moyens moteurs 6, une manivelle 10. Cette manivelle appartient à une tringlerie de transmission T qui comporte également une bielle 11 articulée sur l'extrémité de la manivelle 10 éloignée de l'arbre 9. L'autre extrémité de la bielle 11 est articulée sur un organe 12 lié à l'arbre 3 et communiquant à ce dernier un mouvement de rotation alternative, en réponse à la rotation continue de l'arbre 9.

Le bâti 4 est destiné à être fixé sur la structure d'un véhicule et comporte des manchons taraudés 13 dont l'axe est orthogonal au plan moyen de la platine 5, pour permettre cette fixation.

Le dispositif 1 comporte en outre un réservoir 14 de liquide de lavage de glace et des moyens de pompage immergés dans le réservoir et dont seul le moteur électrique d'entraînement 15 fait saillie hors du réservoir. Ce moteur 15 est disposé avec son arbre vertical dans une partie concave, sensiblement cylindrique à génératrices verticales, prévue dans un angle du réservoir 14. Les moyens de pompage sont reliés par une tuyauterie souple, non visible, sur le dessin à un gicleur 16 pour projeter le liquide de lavage sur la glace à essuyer.

Le réservoir de liquide 14 est conçu de manière à s'intégrer le mieux possible dans les cotes d'encombrement du mécanisme d'entraînement 2, et est relié rigidement au bâti 4 de ce mécanisme.

Le réservoir 14, de forme d'ensemble parallélépipédique rectangle, est situé au-dessous de la platine 5 et présente une paroi supérieure 17 concave, propre à recevoir, dans sa concavité, une partie des moyens moteurs 6 qui font saillie sous la platine 5.

Le contour de la projection sur un plan horizontal du réservoir 14 est situé au voisinage du contour du bâti 4 de sorte que l'encombrement longitudinal et transversal de l'ensemble corresponde sensiblement à celui du bâti 4. En hauteur, la partie en saillie des moyens moteurs 6 vient s'inscrire dans la concavité du réservoir 14 de telle sorte que l'encombrement vertical de l'ensemble n'est que faiblement augmenté.

Le réservoir 14 comporte, sur le côté opposé au moteur 15, une partie 18 se prolongeant vers l'avant au-delà du bâti 4. Cette partie 18 est munie, en haut, d'un orifice 19 de remplissage du réservoir 14. Cet orifice 19 se trouve à l'extérieur du contour du bâti 4 pour faciliter le versement du liquide de remplissage.

La platine 5 comporte, sur son bord longitudinal avant, deux pattes 20, 21 écartées l'une de l'autre, dirigées vers le bas et munies d'ouvertures 22 (voir figure 2) propres à recevoir des parties en saillie 23 prévues sur la face avant du réservoir 14. Un manchon de protection 24, par exemple en matière élastomère, est enfilé autour de la partie en saillie 23 et est engagé dans l'ouverture 22.

Un troisième point de liaison entre le réservoir 14 et le bâti 4 est prévu à l'arrière du bâti qui comporte une patte 25 (voir figure 3) faisant saillie vers le bas et munie d'une extrémité recourbée 26 à l'horizontale propre à être fixée, notamment par une vis 27 traversant un trou prévu dans cette partie 26, sur une paroi d' appui 28 horizontale prévue sur le réservoir 14.

Les pattes 20, 21 peuvent comporter, vers leur extrémité inférieure, des trous tels que 29 pour une fixation supplémentaire.

L'assemblage du réservoir 14 et du bâti 4 est effectué rapidement puisqu'il suffit d'engager les parties en saillie 23 dans les ouvertures 22 et de fixer la patte 25 sur l'appui 28 du réservoir.

On obtient alors un ensemble qui peut être monté facilement et rapidement sur la structure du véhicule à l'aide des manchons 13.

Le dispositif d'essuie-glace avec réservoir de liquide de lavage conforme à l'invention constitue un ensemble facile à mettre en place et d'encombrement réduit.

## Revendications

1. Dispositif d'essuie-glace comprenant d'une part, un mécanisme d'entraînement (2) d'au moins un bras d'essuie-glace avec un encombrement longitudinal, transversal et en hauteur, ledit mécanisme comportant un bâti (4) comprenant une platine (5) sur laquelle sont montés des moyens moteurs (6) faisant saillie d'un côté de la platine (5) et une transmission de mouvement entre les moyens moteurs (6) et au moins un arbre (3) de bras d'essuie-glace, ce bâti (4) étant destiné à être fixé sur la structure d'un véhicule, en particulier un véhicule automobile, et, d'autre part, un réservoir (14) de liquide de lavage de glace d'encombrement longitudinal, transversal et en hauteur et faisant saillie d'un même côté de la platine (5) que les moyens moteurs (6) dans lequel le réservoir (14) est rigidement relié au bâti (4) du mécanisme d'entraînement (2) en formant un ensemble avec ce bâti (4) et dans lequel des moyens de pompage sont prévus pour permettre la projection du liquide de lavage sur la glace lors d'un essuyage, caractérisé en ce que le bâti (4) est constitué principalement de la platine (5), lesdits moyens moteurs (6) faisant saillie sur le côté de la platine (5) qui est opposé à celui où se trouve la transmission de mouvement, en ce que la transmission de mouvement comporte une tringlerie (T) de transmission de mouvement entre un arbre (9) entraîné par les moyens moteurs (6) et ledit au moins arbre (3) de bras d'essuie-glace, en ce que le réservoir (14) est relié à la platine (5) du mécanisme d'entraînement (2) en formant avec ce mécanisme d'entraînement (2) un ensemble tel que l'encombrement longitudinal, transversal et en hauteur du réservoir (14) soit inclus dans l'encombrement longitudinal, transversal et en hauteur du mécanisme d'entraînement (2) et en ce que le réservoir (14) a une paroi extérieure tournée vers la platine qui est concave (17) et qui lui permet de recevoir dans sa concavité une partie des moyens moteurs (6) du mécanisme d'entraînement (2).

2. Dispositif d'essuie-glace selon la revendication 1, caractérisé en ce que la platine a une forme allongée suivant la direction d'ensemble de la tringlerie (T) de transmission de mouvement et en ce que le réservoir (14) de liquide de lavage est réalisé sous une forme allongée, selon la même direction d'ensemble que la tringlerie (T).

3. Dispositif selon la revendication 1 ou 2, caractérisé par le fait que la platine (5) comporte, sur un bord longitudinal, en particulier tourné vers l'avant, deux pattes (20,21) écartées l'une de l'autre, dirigées vers le bas, comportant des ouvertures (22) propres à recevoir des parties (23) en saillie prévues sur le réservoir (14), tandis que sur le bord longitudinal opposé est prévue au moins une patte (25) dirigée vers le bas propre à être fixée, notamment par une vis, sur un appui (28) prévu sur le réservoir (14).

4. Dispositif selon l'une quelconque des revendications précédentes, caractérisé par le fait que le bâti (4) comporte des moyens de fixation, tels que des manchons taraudés (13) orientés sensiblement orthogonalement au plan moyen de la platine (5), pour la fixation de l'ensemble bâti/réservoir sur la structure du véhicule.

## Claims

1. A screen wiper apparatus comprising, firstly, a drive mechanism (2) for at least one screen wiper arm having longitudinal, transverse and depthwise dimensions, the said mechanism including a support structure (4) comprising a base plate (5) on which are mounted motor means (6) projecting on one side of the base plate (5), and a transmission for transmitting motion between the motor means (6) and at least one screen wiper arm spindle (3), the support structure (4) being adapted to be fixed on the structure of a vehicle, in particular a motor vehicle, and secondly, a screen washing liquid reservoir (14) having longitudinal, transverse and depthwise dimensions and projecting on the same side of the base plate (5) as the motor means (6), wherein the reservoir (14) is rigidly connected to the support structure (4) of the drive mechanism (2) to define an assembly with the support structure (4), and wherein pumping means are provided for projecting the washing liquid on the screen during a wiping operation, characterised in that the support structure (4) consists mainly of the base plate (5), with the said motor means (6) projecting on the side of the base plate (5) which is opposite to that on which the motion transmission is located, in that the motion transmission comprises a linkage (T) for transmitting motion between a spindle (9), driven by the motor means (6), and the said at least one screen wiper arm spindle (3), in that the reservoir (14) is connected to the base plate (5) of the drive mechanism (2) so as to constitute, with the drive mechanism (2), an assembly such that the longitudinal, transverse and depthwise dimensions of the reservoir (14) are within the longitudinal, transverse and depthwise limits of the drive mechanism (2), and in that the reservoir (14) has an external wall (17) which faces towards the base plate and is concave, whereby it can receive in its concavity a part of the motor means (6) of the drive mechanism (2).

2. A screen wiper apparatus according to Claim 1, characterised in that the base plate has a shape which is elongated in the general direction of the motion transmission linkage (T), and in that the washing liquid reservoir (14) is made in a shape which is elongated in the same general direction as the linkage (T).

3. Apparatus according to Claim 1 or Claim 2, characterised by the fact that the base plate (5) includes, on a longitudinal edge, in particular one which is directed forwards, two feet (20, 21) which are spaced apart and directed downwardly, having holes (22) adapted to receive projecting portions (23) provided on the reservoir (14), while on the opposite longitudinal edge there is arranged at least one foot (25) which is directed downwardly and which is adapted to be secured, in particular by means of a screw, on a support element (28) provided on the reservoir (14).

4. Apparatus according to any one of the preceding Claims, characterised by the fact that the support structure (4) includes fastening means, for example threaded sleeves (13) which are orientated substantially orthogonally to the midplane of the base plate (5), for securing on the structure of the vehicle the assembly comprising the support structure and reservoir.

## Patentansprüche

1. Scheibenwischeranlage, umfassend einerseits einen Antriebsmechanismus (2) für mindestens einen Scheibenwischerarm mit einem Längs-, Quer- und Höhenplatzbedarf, wobei der besagte Mechanismus einen Rahmen (4) umfaßt, der eine Platte (5) enthält, an der Antriebsmittel (6), die auf einer Seite der Platte (5) vorspringen, und eine Bewegungsübertragung zwischen den Antriebsmitteln (6) und mindestens einer Welle (3) eines Scheibenwischerarms angebracht sind, wobei dieser Rahmen (4) zur Befestigung an der Struktur eines Fahrzeugs, insbesondere eines Kraftfahrzeugs, bestimmt ist, und andererseits einen Scheibenwaschwasserbehälter (14) mit einem Längs-, Quer- und Höhenplatzbedarf, der auf einer gleichen Seite der Platte (5) wie die Antriebsmittel (6) vorspringt, wobei der Behälter (14) starr mit dem Rahmen (4) des Antriebsmechanismus (2) verbunden ist und mit diesem Rahmen (4) eine Einheit bildet und wobei Pumpmittel vorgesehen sind, um das Aufspritzen der Waschflüssigkeit auf die Scheibe während eines Wischvorgangs zu ermöglichen, **dadurch gekennzeichnet,** daß der Rahmen (4) hauptsächlich aus der Platte (5) besteht, wobei die besagten Antriebsmittel (6) auf der Seite der Platte (5) vorspringen, die der Seite gegenüberliegt, auf der sich die Bewegungsübertragung befindet, daß die Bewegungsübertragung ein Gestänge (T) für die Bewegungsübertragung zwischen einer durch die Antriebsmittel (6) angetriebene Welle (9) und der besagten mindestens einen Welle (3) eines Scheibenwischerarms umfaßt, daß der Behälter (14) mit der Platte (5) des Antriebsmechanismus (2) verbunden ist, wobei er mit diesem Antriebsmechanismus (2) eine Einheit bildet, so daß der Längs-, Quer- und Höhenplatzbedarf des Behälters (14) im Längs-, Quer- und Höhenplatzbedarf des Antriebsmechanismus (2) enthalten ist, und daß der Behälter (14) eine zur Platte gerichtete Außenwand (17) hat, die konkav ist und die es ihm ermöglicht, in seiner Austiefung einen Teil der Antriebsmittel (6) des Antriebsmechanismus (2) aufzunehmen.

2. Scheibenwischeranlage nach Anspruch 1, **dadurch gekennzeichnet**, daß die Platte eine längliche Form in der Gesamtrichtung des Gestänges (T) zur Überwegungsübertragung hat und daß der Waschwasserbehälter (14) in einer länglichen Form in der gleichen Gesamtrichtung wie das Gestänge (T) ausgeführt ist.

3. Anlage nach Anspruch 1 oder 2, **dadurch gekennzeichnet,** daß die Platte (5) an einer, insbesondere nach vorne gerichteten Längskante zwei zueinander beabstandete, nach unten gerichtete Ansätze (20, 21) umfaßt, die Öffnungen (22) für die Aufnahme vorspringender Teile (23) enthält, die auf dem Behälter (14) vorgesehen sind, während an der gegenüberliegenden Längskante mindestens ein nach unten gerichteter Ansatz (25) vorgesehen ist, der, insbesondere durch eine Schraube, auf einer am Behälter (14) vorgesehenen Auflage (28) befestigt werden kann.

4. Anlage nach einem der vorangehenden Ansprüche, **dadurch gekennzeichnet**, daß der Rahmen (4) Befestigungsmittel, wie etwa Gewindemuffen (13), umfaßt, die in etwa rechtwinklig zur Mittelebene der Platte (5) gerichtet sind, um die Einheit aus Rahmen und Behälter an der Struktur des Fahrzeugs zu befestigen.
